# FASCICULE DE BREVET EUROPEEN

(11) **EP 2 785 229 B1**
(45) Date de publication et mention de la délivrance du brevet: **14.12.2016**
(21) Numéro de dépôt: 12816692.3
(22) Date de dépôt: 30.11.2012
(51) Int. Cl.: A47J 43/044, A47J 44/02

(54) **ACCESSOIRE DE SUPPORT DE BOITIER MOTORISE D'APPAREIL ELECTROMENAGER DE PREPARATION CULINAIRE**
ZUBEHÖR ZUR UNTERSTÜTZUNG EINES MOTORANGETRIEBENEN GEHÄUSES EINES KÜCHENGERÄTS
ACCESSORY FOR SUPPORTING A MOTOR-DRIVEN HOUSING OF A KITCHEN APPLIANCE

(30) Priorité: 02.12.2011 FR 1161109
(43) Date de publication de la demande: 08.10.2014
(73) Titulaire: SEB S.A., 69130 Ecully (FR)
(72) Inventeur: FERRER, Florent, F-65310 Laloubere (FR); LARGUEZE, Mathieu, F-65000 Tarbes (FR)
(74) Mandataire: Cémeli, Eric Philippe Laurent
(86) Numéro de dépôt international: PCT/FR2012/052769
(87) Numéro de publication internationale: WO 2013/079884

(56) Documents cités:
- WO-A1-96/25081
- DE-A1- 2 303 571
- US-A- 2 615 691
- US-A- 4 074 584
- US-A1- 2004 001 387

## Description

La présente invention concerne le domaine technique des appareils de préparation culinaire comportant un boîtier motorisé disposé sur un accessoire de support.

De tels appareils sont notamment connus sous la dénomination de stand-mixer. L'accessoire de support porte ou comporte un récipient de travail dans lequel s'étend un outil de travail rotatif monté sous le boîtier motorisé porté par l'accessoire de support. Si désiré, le récipient de travail peut être entraîné en rotation.

La présente invention concerne plus particulièrement les accessoires de support prévus pour porter un boîtier motorisé, ainsi que les appareils comportant un boitier motorisé et un accessoire de support.

Il est connu du document DE 2 303 571 de réaliser un appareil du type précité, dans lequel le boîtier motorisé comporte au moins une sortie d'entraînement inférieure prévue pour le montage d'un outil de travail rotatif s'étendant dans le récipient de travail lorsque le boîtier motorisé est porté par l'accessoire de support, ainsi qu'une autre sortie d'entraînement usuellement prévue pour le montage d'un accessoire de travail de type pied mixeur. L'accessoire de support comporte un dispositif d'accrochage prévu pour venir en prise avec le boîtier motorisé dans l'autre sortie d'entraînement. Un inconvénient de la réalisation proposée réside dans le fait que le dispositif d'accrochage comporte une pièce d'accouplement à vis. Une telle réalisation rend la mise en place et le retrait du boîtier motorisé fastidieux et ne contribue pas à faciliter la réalisation ni le nettoyage du boîtier motorisé.

Un accessoire de support selon le préambule de la revendication 1 est connu des documents US 2004/001387, US4074584, US2615691.

Un objet de la présente invention est de proposer un accessoire de support prévu pour recevoir un boîtier motorisé d'appareil électroménager de préparation culinaire, avec lequel la mise en place et le retrait du boîtier motorisé sont facilités.

Un autre objet de la présente invention est de proposer un appareil électroménager de préparation culinaire comportant un boîtier motorisé et un accessoire de support prévu pour recevoir le boîtier motorisé, dans lequel la mise en place et le retrait du boîtier motorisé sont facilités.

Un autre objet de la présente invention est de proposer un appareil électroménager de préparation culinaire comportant un boîtier motorisé et un accessoire de support prévu pour recevoir le boîtier motorisé, dans lequel la réalisation du boîtier motorisé est simplifiée, tout en conservant une construction simple pour l'accessoire de support.

Ces objets sont atteints avec un accessoire de support prévu pour recevoir un boîtier motorisé d'appareil électroménager de préparation culinaire, comportant une base d'appui et un organe de support prévu pour porter le boîtier motorisé, ainsi qu'un dispositif d'accrochage prévu pour venir en prise avec le boîtier motorisé porté par l'organe de support, le dispositif d'accrochage comportant un organe de positionnement ainsi qu'un organe d'accrochage monté mobile vers l'organe de positionnement contre un élément de rappel élastique, du fait que l'organe d'accrochage est monté mobile vers l'organe de positionnement en direction de la base d'appui. L'organe d'accrochage peut ainsi être rapproché de l'organe de positionnement pour permettre la mise en place du boîtier motorisé sur l'organe de support, puis être relâché pour obtenir un maintien du boîtier motorisé sur l'organe de support.

Selon une forme de réalisation avantageuse, l'organe de positionnement et l'organe de support appartiennent à une même pièce. Cette disposition permet de simplifier la construction de l'accessoire.

Selon une forme de réalisation préférée, l'organe d'accrochage est monté mobile contre l'élément de rappel élastique en direction de l'organe de support. Cette disposition permet de simplifier l'utilisation de l'accessoire.

Avantageusement, l'organe de positionnement est formé par une nervure incurvée présentant une face interne s'étendant du côté de l'organe d'accrochage. Cette disposition permet de rigidifier l'organe de positionnement et de simplifier sa réalisation.

Avantageusement, l'organe d'accrochage comporte un crochet porté par un bouton de manoeuvre. Cette disposition permet de simplifier la réalisation de l'organe d'accrochage.

Selon une forme de réalisation avantageuse, l'organe d'accrochage est monté mobile en translation par rapport à l'organe de support. Cette disposition permet de faciliter l'accrochage du boîtier motorisé, ainsi que son retrait.

Selon une forme de réalisation avantageuse, l'organe de support forme une glissière présentant une entrée frontale. Cette disposition permet de faciliter la mise en place du boîtier motorisé. Le boîtier motorisé peut être posé sur l'organe de support à distance de l'organe d'accrochage puis être translaté vers l'organe d'accrochage.

Selon une forme de réalisation, ledit accessoire de support comporte un récipient de travail. En alternative, ledit accessoire de support pourrait être prévu pour porter un récipient de travail.

Selon une forme de réalisation avantageuse facilitant le mélange des ingrédients, le récipient de travail repose sur un plateau tournant présentant un axe de rotation incliné.

Ces objets sont atteints également avec un appareil électroménager de préparation culinaire comportant un boîtier motorisé porté par un accessoire de support, le boîtier motorisé comprenant une ouverture arrière et au moins une sortie d'entraînement inférieure recevant un outil de travail rotatif, l'accessoire de support comportant un dispositif d'accrochage prévu pour être engagé dans l'ouverture arrière du boîtier motorisé, dans lequel l'accessoire de support est conforme à l'une au moins des caractéristiques précitées.

Selon une forme de réalisation avantageuse, le boîtier motorisé comprend une sortie d'entraînement arrière agencée dans l'ouverture arrière. Le boîtier motorisé peut ainsi recevoir un accessoire de travail tel qu'un pied mixeur.

Avantageusement alors, l'ouverture arrière du boîtier motorisé présente un volet d'obturation mobile entre une première position dans laquelle la sortie d'entraînement arrière est accessible et une deuxième position dans laquelle la sortie d'entraînement arrière n'est pas accessible.

Avantageusement alors, la première position du volet d'obturation est une position relevée. Cette disposition permet de simplifier la manoeuvre du volet d'obturation.

Avantageusement encore, l'organe d'accrochage est engagé dans l'ouverture arrière du boîtier motorisé de part et d'autre du volet d'obturation occupant la première position. Cette disposition permet de simplifier l'utilisation du boîtier motorisé, en particulier lorsque l'organe d'accrochage est monté mobile contre l'élément de rappel élastique en direction de l'organe de support.

Selon une forme de réalisation préférée, l'accessoire de support comporte un dispositif de retenue latérale maintenant latéralement le boîtier motorisé disposé sur l'organe de support lorsque le boîtier motorisé est retenu par le dispositif d'accrochage. Le boîtier motorisé est ainsi maintenu latéralement en un deuxième point, de préférence à l'opposé de l'ouverture arrière.

Selon une forme de réalisation préférée, l'accessoire de support comporte un dispositif de retenue verticale maintenant verticalement le boîtier motorisé disposé sur l'organe de support lorsque le boîtier motorisé est retenu par le dispositif d'accrochage. Le boîtier motorisé présente ainsi au moins deux points de retenue verticale, ce qui améliore la tenue du boîtier motorisé sur l'accessoire de support.

Selon une forme de réalisation avantageuse, l'accessoire de support comporte un dispositif de transmission prévu pour entraîner en rotation un récipient de travail, le dispositif de transmission comporte une roue dentée agencée dans une échancrure latérale de l'organe de support et l'outil de travail rotatif porte un pignon denté prévu pour entraîner la roue dentée lorsque le boîtier motorisé est en place sur l'accessoire de support.

L'invention sera mieux comprise à l'étude d'un exemple de réalisation, pris à titre nullement limitatif, illustré dans les figures annexées, dans lesquelles :
- la figure 1 est une vue en perspective d'un exemple de réalisation d'un appareil électroménager de préparation culinaire comportant un boîtier motorisé et un accessoire de support selon l'invention,
- la figure 2 est une vue en perspective arrière du boîtier motorisé illustré sur la figure 1, montrant une sortie d'entraînement arrière,
- la figure 3 est une vue en perspective arrière du boitier motorisé illustré sur les figures 1 et 2, dans laquelle un volet obture la sortie d'entraînement arrière,
- la figure 4 est une vue en perspective du boîtier motorisé illustré sur la figure 1, portant un outil pied mixeur monté dans la sortie d'entraînement arrière,
- la figure 5 est une vue en coupe de l'organe d'accrochage de l'accessoire de support illustré sur la figure 1,
- la figure 6 est une vue en perspective de dessus du boîtier motorisé illustré sur les figures 1 à 4 en cours de mise en place sur l'accessoire de support illustré sur les figures 1 et 5,
- la figure 7 est une vue en coupe de la partie arrière du boîtier motorisé illustré sur les figures 1 à 4 et de l'organe d'accrochage illustré sur les figures 1, 5 et 6.

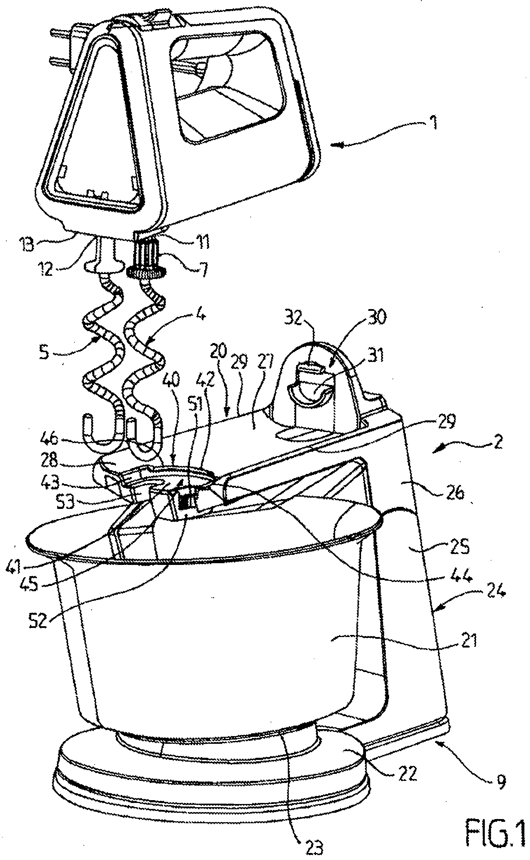

L'appareil électroménager de préparation culinaire illustré sur la figure 1 comporte un boîtier motorisé 1 et un accessoire de support 2 prévu pour recevoir le boîtier motorisé 1.

L'accessoire de support 2 comporte un organe de support 20 prévu pour porter le boîtier motorisé 1, ainsi qu'un dispositif d'accrochage 30 prévu pour venir en prise avec le boîtier motorisé 1 porté par l'organe de support 20.

Tel que bien visible sur la figure 1, l'accessoire de support 2 comporte une base d'appui 9.

Le boîtier motorisé 1 comprend au moins une sortie d'entraînement inférieure 11 recevant un outil de travail rotatif 4. L'outil de travail rotatif 4 porte un pignon denté 7.

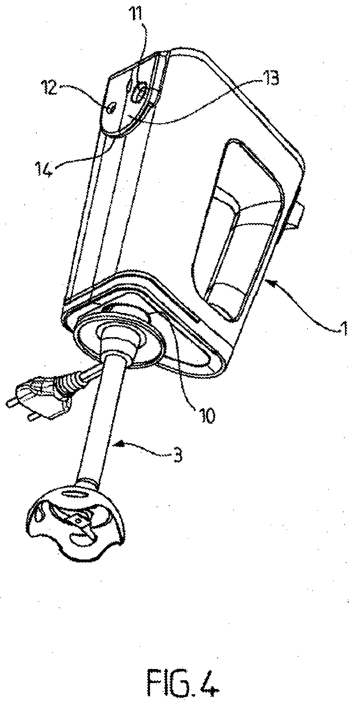

Dans l'exemple de réalisation illustré sur la figure 1, le boîtier motorisé 1 comprend une autre sortie d'entraînement inférieure 12 recevant un autre outil de travail rotatif 5. L'outil de travail rotatif 4 et l'autre outil de travail rotatif 5 illustrés sur la figure 1 sont du type crochet de pétrissage, d'autres types d'outils tel que des fouets pour battre les oeufs en neige pourraient également être utilisés. La sortie d'entraînement inférieure 11 et l'autre sortie d'entraînement inférieure 12, mieux visibles sur la figure 4, sont avantageusement du type à douille fendue, utilisé dans les appareils de type batteur.

L'accessoire de support 2 comporte un récipient de travail 21. Le récipient de travail 21 est agencé sur un socle 22 de l'accessoire de support 2. Plus particulièrement dans l'exemple de réalisation illustré sur la figure 1, le récipient de travail 21 repose sur un plateau tournant 23. Le plateau tournant 23 présente un axe de rotation incliné.

L'accessoire de support 2 comporte un montant 24 adjacent au socle 22. Le montant 24 comprend une partie inférieure 25 solidaire du socle 22 et une partie supérieure 26 prolongée par l'organe de support 20. L'organe de support 20 s'étend au dessus du socle 22 et du récipient de travail 21. La partie supérieure 26 du montant 24 est avantageusement montée pivotante sur la partie inférieure 25 du montant 24, pour faciliter la mise en place et le retrait du récipient de travail 21 lorsque le boîtier motorisé 1 est monté sur l'accessoire de support 2.

L'organe de support 20 forme une glissière 27 présentant une entrée frontale 28. La glissière 27 présente deux bords latéraux 29 relevés.

L'accessoire de support 2 présente un renfoncement 41 agencé dans l'organe de support 20 à proximité de l'entrée frontale 28. Le renfoncement 41 est prévu pour recevoir une protubérance inférieure 13 du boîtier motorisé 1. Le renfoncement 41 présente un fond 42 agencé à l'opposé de l'entrée frontale 28 ainsi que deux parois latérales 43, 44. Les parois latérales 43, 44 sont raccordées au fond 42 par un arrondi. L'accessoire de support 2 comporte ainsi un dispositif de retenue latérale 40 maintenant latéralement le boîtier motorisé 1 disposé sur l'organe de support 20 lorsque le boîtier motorisé 1 est retenu par le dispositif d'accrochage 30.

L'accessoire de support 2 comporte une conformation de retenue supérieure 46 agencée dans l'organe de support 20 en partie supérieure du fond 42 du renfoncement 41. La conformation de retenue supérieure 46 est prévue pour coopérer avec une conformation de retenue inférieure 14 agencée sur le boîtier motorisé 1. L'accessoire de support 2 comporte ainsi un dispositif de retenue verticale 45 maintenant verticalement le boîtier motorisé 1 disposé sur l'organe de support 20 lorsque le boîtier motorisé 1 est retenu par le dispositif d'accrochage 30.

Selon une forme de réalisation avantageuse, l'accessoire de support 2 comporte un dispositif de transmission prévu pour entraîner en rotation le récipient de travail 21. Le dispositif de transmission comporte une roue dentée 51 agencée dans une échancrure latérale 52 de l'organe de support 20. L'échancrure latérale 52 est prévue pour loger l'extrémité supérieure de l'outil de travail rotatif 4. Le pignon denté 7 de l'outil de travail rotatif 4 est prévu pour entraîner la roue dentée 51 lorsque le boîtier motorisé 1 est en place sur l'accessoire de support 2.

L'organe de support 20 présente une autre échancrure latérale 53 adjacente à l'échancrure latérale 52, prévue pour loger l'extrémité supérieure de l'autre outil de travail rotatif 5. L'échancrure latérale 52 et l'autre échancrure latérale 53 sont agencées sur l'extrémité de l'organe de support 20 opposée au montant 24, du côté de l'entrée frontale 28.

Le boîtier motorisé 1 comprend une ouverture arrière 10 utilisée pour le maintien du boîtier motorisé 1 sur l'accessoire de support 2 au moyen du dispositif d'accrochage 30.

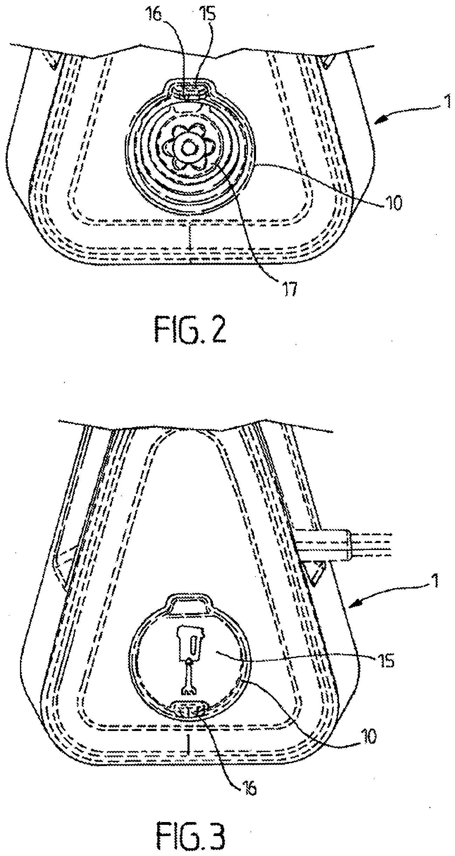

Tel que représenté sur la figure 2, une sortie d'entraînement arrière 17 est agencée dans l'ouverture arrière 10 du boîtier motorisé 1.

L'ouverture arrière 10 du boîtier motorisé 1 présente un volet d'obturation 15. Le volet d'obturation 15 présente un organe de manoeuvre 16. Le volet d'obturation 15 est mobile entre une première position, illustrée sur la figure 2, dans laquelle la sortie d'entraînement arrière est accessible et une deuxième position, illustrée sur la figure 3, dans laquelle la sortie d'entraînement arrière 17 n'est pas accessible. Dans l'exemple de réalisation illustré sur les figures, la première position du volet d'obturation 15 est une position relevée, et la deuxième position du volet d'obturation 15 est une position abaissée.

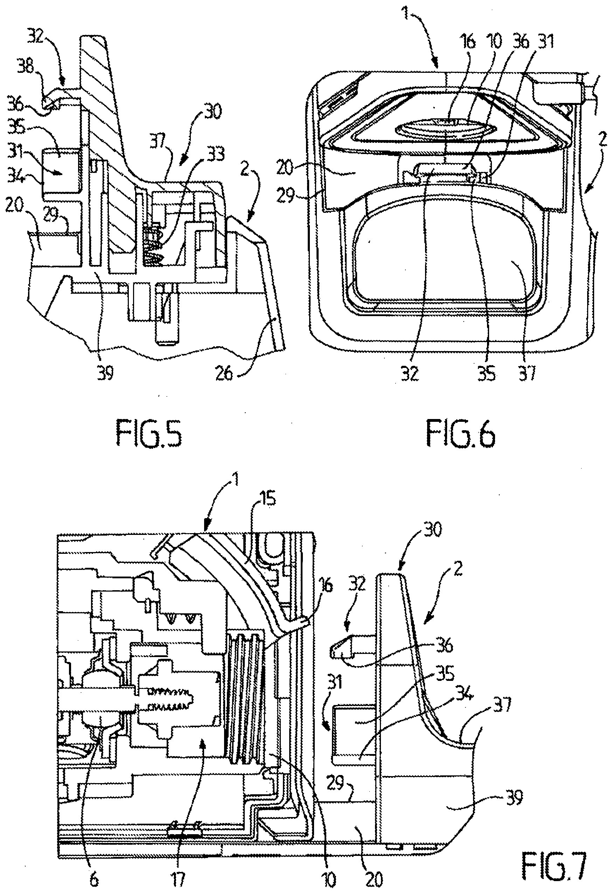

Le boîtier motorisé 1 comporte un moteur 6 électrique, visible sur la figure 7, entraînant en rotation la sortie d'entraînement inférieure 11, l'autre sortie d'entraînement inférieure 12 ainsi que la sortie d'entraînement arrière 17. La sortie d'entraînement inférieure 11 et l'autre sortie d'entraînement inférieure 12 sont entraînées en rotation par l'intermédiaire d'un dispositif réducteur, non représenté sur les figures, et la sortie d'entrainement arrière 17 est entrainée directement par le moteur 6, tel que représenté sur la figure 7.

Tel que visible sur la figure 4, la protubérance inférieure 13 du boîtier motorisé 1 est agencée autour de la sortie d'entraînement inférieure 11 et de l'autre sortie d'entraînement inférieure 12. La conformation de retenue inférieure 14 du boîtier motorisé 1 est agencée en bordure de la protubérance inférieure 13. La protubérance inférieure 13 présente un arrondi prévu pour être logé dans le renfoncement 41. Le renfoncement 41 et la protubérance inférieure 13 forment des butées latérales.

La sortie d'entraînement arrière 17 du boîtier motorisé 1 peut recevoir un accessoire de. travail 3 monté dans l'ouverture arrière 10 du boîtier motorisé 1. Tel que représenté sur la figure 4, l'accessoire de travail 3 est de type pied mixeur.

La sortie d'entraînement arrière 17 du boîtier motorisé 1 peut aussi être utilisée pour le montage du boîtier motorisé 1 sur l'accessoire de support 2.

Tel que visible sur la figure 5, le dispositif d'accrochage 30 comporte un organe de positionnement 31 ainsi qu'un organe d'accrochage 32 monté mobile vers l'organe de positionnement 31 contre un élément de rappel élastique 33.

Tel que représenté sur les figures 6 et 7, le boîtier motorisé 1 est porté par l'accessoire de support 2, mais n'est pas encore maintenu par le dispositif d'accrochage 30. Le boîtier motorisé 1 posé sur l'organe de support 20 peut être translaté en direction du dispositif d'accrochage 30.

Plus particulièrement dans l'exemple de réalisation illustré sur les figures, l'organe d'accrochage 32 est monté mobile contre l'élément de rappel élastique 33 en direction de l'organe de support 20. Tel que bien visible sur les figures 5 et 7, l'organe de positionnement 31 est agencé entre l'organe d'accrochage 32 et l'organe de support 20. Ainsi l'organe d'accrochage 32 est monté mobile vers l'organe de positionnement 31 en direction de la base d'appui 9. L'organe de positionnement 31 et l'organe de support 20 appartiennent à une même pièce 39. La pièce 39 forme la face supérieure de la partie supérieure 26 du montant 24. L'organe de positionnement 31 est formé par une nervure incurvée 34 présentant une face interne 35 s'étendant du côté de l'organe d'accrochage 32.

Ainsi l'organe de positionnement 31 peut être inséré dans l'ouverture arrière 10 circulaire au plus près de la paroi du boitier motorisé 1. L'organe de positionnement 31 permet un maintien latéral du boîtier motorisé 1 en place sur l'accessoire de support 2.

L'organe d'accrochage 32 comporte un crochet 36 porté par un bouton de manoeuvre 37. Le crochet 36 présente une face supérieure 38 en biseau permettant de faciliter l'insertion du crochet 36 dans l'ouverture arrière 10 logeant la sortie d'entraînement arrière 17 du boîtier motorisé 1. L'organe d'accrochage 32 est monté mobile en translation par rapport à l'organe de support 20.

Tel que visible sur la figure 7, le volet 15 présente un profil arrondi pour pouvoir obturer l'ouverture arrière 10 dans la position illustrée sur la figure 3 et être inséré à l'intérieur du boîtier motorisé 1 dans la position illustrée sur les figures 2, 6 et 7.

Le fonctionnement de la présente invention est le suivant.

L'utilisateur dispose le boîtier motorisé 1 sur l'organe de support 20 avec l'outil de travail rotatif 4 et l'autre outil de travail rotatif 5 agencés du côté de l'entrée frontale 28 de la glissière 27. L'utilisateur dispose le volet d'obturation 15 en position relevée et translate le boîtier motorisé 1 vers le dispositif d'accrochage 30. L'utilisateur appuie sur le bouton de manoeuvre 37 de l'organe d'accrochage 32 et peut alors mettre en place l'organe d'accrochage 32 et l'organe de positionnement 31 dans l'ouverture arrière 10 logeant la sortie d'entraînement arrière 17 du boîtier motorisé 1 pour maintenir le boîtier motorisé 1 sur l'accessoire de support 2. L'organe d'accrochage 32 est alors engagé dans l'ouverture arrière 10 du boîtier motorisé 1 de part et d'autre du volet d'obturation 15 occupant la première position. La conformation de retenue supérieure 46 de l'accessoire de support 2 est en prise avec la conformation de retenue inférieure 14 du boîtier motorisé 1.

Ainsi le dispositif de retenue verticale 45 de l'accessoire de support 2 vient en prise avec le boîtier motorisé 1 lorsque le boîtier motorisé 1 disposé sur l'organe de support 20 est retenu par le dispositif d'accrochage 30.

L'organe de positionnement 31 agencé entre l'organe de support 20 et l'organe d'accrochage. 32 permet une mise en place du boîtier motorisé 1 sur l'accessoire de support 2 par translation longitudinale sur l'organe de support 20. L'organe de positionnement 31 agencé entre l'organe de support 20 et l'organe d'accrochage 32 permet aussi un maintien vertical du boîtier motorisé 1 sur l'accessoire de support 2.

L'organe d'accrochage 32 en prise dans l'ouverture arrière 10 du boîtier motorisé 1 permet un maintien longitudinal du boîtier motorisé 1 sur l'accessoire de support 2.

Ainsi le boîtier motorisé 1 est maintenu par l'organe d'accrochage 32 selon la direction longitudinale, et par l'organe de positionnement 31 selon la direction verticale et les directions latérales.

En complément, le boîtier motorisé 1 est maintenu sur l'accessoire de support 2 selon la direction verticale par la conformation de retenue supérieure 46 venant en prise avec la conformation de retenue inférieure 14, et selon les directions latérales par le renfoncement 41 recevant la protubérance inférieure 13.

Le boîtier motorisé 1 est ainsi maintenu sur l'accessoire de support 2 avec un minimum d'éléments spécifiques.

Pour retirer le boîtier motorisé 1 de l'accessoire de support 2, l'utilisateur appuie sur le bouton de manoeuvre 37 de l'organe d'accrochage 32 et translate le boîtier motorisé 1 en direction de l'entrée frontale 28.

A titre de variante, l'accessoire de support 2 et le boîtier motorisé 1 peuvent comporter d'autres butées latérales que l'organe de positionnement 31 et l'ouverture arrière 10, le renfoncement 41 et la protubérance inférieure 13.

A titre de variante, l'accessoire de support 2 et le boîtier motorisé 1 peuvent comporter d'autres butées verticales que l'organe de positionnement 31 et l'ouverture arrière 10, la conformation de retenue supérieure 46 et la conformation de retenue inférieure 14.

A titre de variante, l'accessoire de support 2 ne comporte pas nécessairement un dispositif de transmission prévu pour entraîner en rotation le récipient de travail 21.

A titre de variante, l'accessoire de support 2 ne comporte pas nécessairement un récipient de travail. L'accessoire de support peut alors être prévu pour porter un récipient de travail.

A titre de variante, l'organe d'accrochage 32 n'est pas nécessairement monté mobile en translation, mais peut notamment être monté pivotant.

A titre de variante, l'élément de rappel élastique 33 n'est pas nécessairement un ressort hélicoïdal.

La présente invention n'est nullement limitée à l'exemple de réalisation décrit et à ses variantes, mais englobe de nombreuses modifications dans le cadre des revendications.

## Revendications

1. Accessoire de support (2) prévu pour recevoir un boîtier motorisé (1) d'appareil électroménager de préparation culinaire, comportant une base d'appui (9) et un organe de support (20) prévu pour porter le boîtier motorisé (1), ainsi qu'un dispositif d'accrochage (30) prévu pour venir en prise avec le boîtier motorisé (1) porté par l'organe de support (20), le dispositif d'accrochage (30) comportant un organe de positionnement (31) ainsi qu'un organe d'accrochage (32) monté mobile vers l'organe de positionnement (31) contre un élément de rappel élastique (33), **caractérisé en ce que** l'organe d'accrochage (32) est monté mobile vers l'organe de positionnement (31) en direction de la base d'appui (9).

2. Accessoire de support (2) selon la revendication 1, **caractérisé en ce que** l'organe de positionnement (31) et l'organe de support (20) appartiennent à une même pièce (39).

3. Accessoire de support (2) selon l'une des revendications 1 ou 2, **caractérisé en ce que** l'organe d'accrochage (32) est monté mobile contre l'élément de rappel élastique (33) en direction de l'organe de support (20).

4. Accessoire de support (2) selon l'une des revendications 1 à 3, **caractérisé en ce que** l'organe de positionnement (31) est formé par une nervure incurvée (34) présentant une face interne (35) s'étendant du côté de l'organe d'accrochage (32).

5. Accessoire de support (2) selon l'une des revendications 1 à 4, **caractérisé en ce que** l'organe d'accrochage (32) comporte un crochet (36) porté par un bouton de manoeuvre (37).

6. Accessoire de support (2) selon l'une des revendications 1 à 5, **caractérisé en ce que** l'organe d'accrochage (32) est monté mobile en translation par rapport à l'organe de support (20).

7. Accessoire de support (2) selon l'une des revendications 1 à 6, **caractérisé en ce que** l'organe de support (20) forme une glissière (27) présentant une entrée frontale (28).

8. Appareil électroménager de préparation culinaire comportant un boîtier motorisé (1) porté par un accessoire de support (2), le boîtier motorisé (1) comprenant une ouverture arrière (10) et au moins une sortie d'entraînement inférieure (11) recevant un outil de travail rotatif (4), l'accessoire de support (2) comportant un dispositif d'accrochage (30) prévu pour être engagé dans l'ouverture arrière (10) du boîtier motorisé (1), **caractérisé en ce que** l'accessoire de support (2) est conforme à l'une des revendications 1 à 7.

9. Appareil électroménager de préparation culinaire selon la revendication 8, **caractérisé en ce que** le boîtier motorisé (1) comprend une sortie d'entraînement arrière (17) agencée dans l'ouverture arrière (10).

10. Appareil électroménager de préparation culinaire selon la revendication 9, **caractérisé en ce que** l'ouverture arrière (10) du boîtier motorisé (1) présente un volet d'obturation (15) mobile entre une première position dans laquelle la sortie d'entraînement arrière (17) est accessible et une deuxième position dans laquelle la sortie d'entraînement arrière (17) n'est pas accessible.

11. Appareil électroménager de préparation culinaire selon la revendication 10, **caractérisé en ce que** la première position du volet d'obturation (15) est une position relevée.

12. Appareil électroménager de préparation culinaire selon l'une des revendications 10 ou 11, **caractérisé en ce que** l'organe d'accrochage (32) est engagé dans l'ouverture arrière (10) du boîtier motorisé (1) de part et d'autre du volet d'obturation (15) occupant la première position.

13. Appareil électroménager de préparation culinaire selon l'une des revendications 8 à 12, **caractérisé en ce que** l'accessoire de support (2) comporte un dispositif de retenue latérale (40) maintenant latéralement le boîtier motorisé (1) disposé sur l'organe de support (20) lorsque le boîtier motorisé (1) est retenu par le dispositif d'accrochage (30).

14. Appareil électroménager de préparation culinaire selon l'une des revendications 8 à 13, **caractérisé en ce que** l'accessoire de support (2) comporte un dispositif de retenue verticale (45) maintenant verticalement le boîtier motorisé (1) disposé sur l'organe de support (20) lorsque le boîtier motorisé (1) est retenu par le dispositif d'accrochage (30).

15. Appareil électroménager de préparation culinaire selon l'une des revendications 8 à 14, **caractérisé en ce que** l'accessoire de support (2) comporte un dispositif de transmission prévu pour entraîner en rotation un récipient de travail (21), **en ce que** le dispositif de transmission comporte une roue dentée (51) agencée dans une échancrure latérale (52) de l'organe de support (20) et **en ce que** l'outil de travail rotatif (4) porte un pignon denté (7) prévu pour entraîner la roue dentée (51) lorsque le boîtier motorisé (1) est en place sur l'accessoire de support (2).

## Patentansprüche

1. Halterungszubehör (2) zur Aufnahme eines motorangetriebenen Gehäuses (1) eines Elektrohaushaltsgeräts zur Nahrungsmittelzubereitung, bestehend aus einem Auflagesockel (9) und einem Stützteil (20), welches das motorangetriebene Gehäuse (1) trägt, sowie einer Einhängevorrichtung (30), die mit dem motorangetriebenen Gehäuse (1), das von dem Stützteil (20) getragen wird, in Eingriff gebracht werden kann, wobei die Einhängevorrichtung (30) eine Positioniereinrichtung (31) und eine Befestigungseinrichtung (32) umfasst, die zur Positioniereinrichtung (31) hin bewegbar gegen ein elastisches Rückstellement (33) gelagert ist, **dadurch gekennzeichnet, dass** die Befestigungseinrichtung (32) in Richtung des Auflagesockels (9) bewegbar gegen die Positioniereinrichtung (31) gelagert ist.

2. Halterungszubehör (2) nach Anspruch 1, **dadurch gekennzeichnet, dass** die Positioniereinrichtung (31) und das Stützteil (20) zu ein und demselben Teil (39) gehören.

3. Halterungszubehör (2) nach einem der Ansprüche 1 oder 2, **dadurch gekennzeichnet, dass** die Befestigungseinrichtung (32) in Richtung des Stützteils (20) bewegbar gegen das elastische Rückstellelement (33) gelagert ist.

4. Halterungszubehör (2) nach einem der Ansprüche 1 bis 3, **dadurch gekennzeichnet, dass** die Positioniereinrichtung (31) als gekrümmtes und verripptes Bauteil (34) ausgebildet ist, das eine Innenseite (35) aufweist, die sich entlang der Befestigungseinrichtung (32) erstreckt.

5. Halterungszubehör (2) nach einem der Ansprüche 1 bis 4, **dadurch gekennzeichnet, dass** die Befestigungseinrichtung (32) einen Haken (36) umfasst, der von einer Betätigungstaste (37) getragen wird.

6. Halterungszubehör (2) nach einem der Ansprüche 1 bis 5, **dadurch gekennzeichnet, dass** die Befestigungseinrichtung (32) relativ zum Stützteil (20) verschiebbar gelagert ist.

7. Halterungszubehör (2) nach einem der Ansprüche 1 bis 6, **dadurch gekennzeichnet, dass** das Stützteil (20) als Führungsbahn (27) mit einem stirnseitigen Eingang (28) ausgebildet ist.

8. Elektrohaushaltsgerät zur Nahrungsmittelzubereitung, bestehend aus einem motorangetriebenen Gehäuse (1), das von einem Halterungszubehör (2) getragen wird, wobei das motorangetriebene Gehäuse (1) eine hintere Öffnung (10) und mindestens eine unten liegende Ausgangsantriebsvorrichtung (11) umfasst, die ein rotierendes Arbeitswerkzeug (4) aufnimmt, wobei das Halterungszubehör (2) eine Befestigungseinrichtung (30) umfasst, die in die hintere Öffnung (10) des motorangetriebenen Gehäuses (1) eingreifen kann, **dadurch gekennzeichnet, dass** das Halterungszubehör (2) den Ansprüchen 1 bis 7 entspricht.

9. Elektrohaushaltsgerät zur Nahrungsmittelzubereitung nach Anspruch 8, **dadurch gekennzeichnet, dass** das motorangetriebene Gehäuse (1) eine Ausgangsantriebsvorrichtung (17) umfasst, die in der hinteren Öffnung (10) angeordnet ist.

10. Elektrohaushaltsgerät zur Nahrungsmittelzubereitung nach Anspruch 9, **dadurch gekennzeichnet, dass** die hintere Öffnung (10) des motorangetriebenen Gehäuses (1) mit einer Verschlussklappe (15) versehen ist, die sich zwischen einer ersten Stellung, in der die hintere Ausgangsantriebsvorrichtung (17) zugänglich ist, und einer zweiten Stellung bewegen kann, in der die hintere Ausgangsantriebsvorrichtung (17) nicht zugänglich ist.

11. Elektrohaushaltsgerät zur Nahrungsmittelzubereitung nach Anspruch 10, **dadurch gekennzeichnet, dass** die erste Stellung der Verschlussklappe (15) eine angehobene Stellung ist.

12. Elektrohaushaltsgerät zur Nahrungsmittelzubereitung nach einem der Ansprüche 10 oder 11, **dadurch gekennzeichnet, dass** die Befestigungseinrichtung (32) in die hintere Öffnung (10) des motorangetriebenen Gehäuses (1) zu beiden Seiten der in der ersten Stellung befindlichen Verschlussklappe (15) eingeführt wird.

13. Elektrohaushaltsgerät zur Nahrungsmittelzubereitung nach einem der Ansprüche 8 bis 12, **dadurch gekennzeichnet, dass** das Halterungszubehör (2) eine seitliche Haltevorrichtung (40) umfasst, die das motorangetriebene Gehäuse (1), das auf dem Stützteil (20) angeordnet ist, seitlich hält, wenn das motorangetriebene Gehäuse (1) von der Befestigungseinrichtung (30) gehalten wird.

14. Elektrohaushaltsgerät zur Nahrungsmittelzubereitung nach einem der Ansprüche 8 bis 13, **dadurch gekennzeichnet, dass** das Halterungszubehör (2) eine senkrechte Haltevorrichtung (45) umfasst, die das motorangetriebene Gehäuse (1), das auf dem Stützteil (20) angeordnet ist, in senkrechter Richtung hält, wenn das motorangetriebene Gehäuse (1) von der Befestigungseinrichtung (30) gehalten wird.

15. Elektrohaushaltsgerät zur Nahrungsmittelzubereitung nach einem der Ansprüche 8 bis 14, **dadurch gekennzeichnet, dass** das Halterungszubehör (2) eine Getriebeeinrichtung umfasst, die einen Arbeitsbehälter (21) in Drehung versetzt, dass die Getriebeeinrichtung ein Zahnrad (51) umfasst, das in einer seitlichen Aussparung (52) des Stützteils (20) angebracht ist, und dass das rotierende Arbeitswerkzeug (4) mit einem Zahnradritzel (7) versehen ist, der das Zahnrad (51) antreibt, wenn sich das motorangetriebene Gehäuse (1) auf dem Halterungszubehör (2) befindet.

## Claims

1. Support accessory (2) designed to receive a motorised casing (1) of a food preparation household electrical appliance, comprising a support base (9) and a support member (20) designed to carry the motorised casing (1), and a hooking device (30) designed to engage with the motorised casing (1) carried by the support member (20), the hooking device (30) comprising a positioning member (31) and a hooking member (32) movably mounted towards the positioning member (31) against an elastic return element (33), **characterised in that** the hooking member (32) is movably mounted towards the positioning member (31) towards the support base (9).

2. Support accessory (2) according to claim 1, **characterised in that** the positioning member (31) and the support member (20) belong to the same part (39).

3. Support accessory (2) according to claim 1 or 2, **characterised in that** the hooking member (32) is movably mounted against the elastic return element (33) towards the support member (20).

4. Support accessory (2) according to one of claims 1 to 3, **characterised in that** the positioning member (31) is formed by a curved rib (34) having an inner side (35) extending on the side of the hooking member (32).

5. Support accessory (2) according to one of claims 1 to 4, **characterised in that** the hooking member (32) comprises a hook (36) carried by an operating knob (37).

6. Support accessory (2) according to one of claims 1 to 5, **characterised in that** the hooking member (32) is movably mounted in translation relative to the support member (20).

7. Support accessory (2) according to one of claims 1 to 6, **characterised in that** the support member (20) forms a slide (27) having a front inlet (28).

8. Food preparation household electrical appliance having a motorised casing (1) carried by a support accessory (2), the motorised casing (1) comprising a rear opening (10) and at least one lower drive outlet (11) receiving a rotary working tool (4), the support accessory (2) having a hooking device (30) designed to be engaged in the rear opening (10) of the motorised casing (1), **characterised in that** the support accessory (2) is according to one of claims 1 to 7.

9. Food preparation household electrical appliance according to claim 8, **characterised in that** the motorised casing (1) comprises a rear drive outlet (17) arranged in the rear opening (10).

10. Food preparation household electrical appliance according to claim 9, **characterised in that** the rear opening (10) of the motorised casing (1) has a blocking flap (15) movable between a first position in which the rear drive outlet (17) is accessible and a second position in which the rear drive outlet (17) is not accessible.

11. Food preparation household electrical appliance according to claim 10, **characterised in that** the first position of the blocking flap (15) is a raised position.

12. Food preparation household electrical appliance according to claim 10 or 11, **characterised in that** the hooking member (32) is engaged in the rear opening (10) of the motorised casing (1) each side of the blocking flap (15) occupying the first position.

13. Food preparation household electrical appliance according to one of claims 8 to 12, **characterised in that** the support accessory (2) has a lateral retaining device (40) laterally retaining the motorised casing (1) arranged on the support member (20) when the motorised casing (1) is retained by the hooking device (30).

14. Food preparation household electrical appliance according to one of claims 8 to 13, **characterised in that** the support accessory (2) has a vertical retaining device (45) vertically retaining the motorised casing (1) arranged on the support member (20) when the motorised casing (1) is retained by the hooking device (30).

15. Food preparation household electrical appliance according to one of claims 8 to 14, **characterised in that** the support accessory (2) has a transmission device designed to drive in rotation a working receptacle (21), **in that** the device transmission has a gear (51) arranged in a lateral notch (52) of the support member (20) and **in that** the rotary working tool (4) carries a pinion (7) designed to drive the gear (51) when the motorised casing (1) is in position on the support accessory (2).
